# FASCICULE DE BREVET EUROPEEN

(11) **EP 0 751 373 B1**
(45) Date de publication et mention de la délivrance du brevet: **26.09.2001**
(21) Numéro de dépôt: 96109809.2
(22) Date de dépôt: 19.06.1996
(51) Int. Cl.: G01C 19/56

(54) **Dispositif de mesure d'une vitesse angulaire**
Vorrichtung zum Messen einer Winkelgeschwindigkeit
Apparatus for measuring angular speed

(30) Priorité: 29.06.1995 FR 9507847
(43) Date de publication de la demande: 02.01.1997
(73) Titulaire: ASULAB S.A., CH-2501 Bienne (CH)
(72) Inventeur: Silvio, Dalla Piazza, 2610 Saint-Imier (CH)
(74) Mandataire: Patry, Didier Marcel Pierre

(56) Documents cités:
- EP-A- 0 161 049
- EP-A- 0 494 588
- EP-A- 0 515 981
- EP-A- 0 578 519
- US-A- 3 258 617

## Description

La présente invention a pour objet un dispositif de mesure d'une vitesse angulaire comportant :
- un transducteur piézo-électrique destiné à tourner à ladite vitesse angulaire;
- des premiers moyens d'excitation pour exciter une première vibration dudit transducteur à une fréquence déterminée et dans une première direction;
- des moyens de mesure pour produire un signal de mesure de ladite vitesse angulaire en réponse à une deuxième vibration dudit transducteur, ladite deuxième vibration étant due à ladite première vibration, ayant ladite fréquence déterminée et une deuxième direction perpendiculaire à ladite première direction, et comportant une composante utile dont l'amplitude est représentative de ladite vitesse angulaire et une composante parasite dont l'amplitude est indépendante de ladite vitesse angulaire.

Les moyens d'excitation de la première vibration du transducteur d'un dispositif tel que celui qui est défini ci-dessus comportent, de manière bien connue, des électrodes d'excitation disposées sur ce transducteur et un circuit électronique relié à ces électrodes et agencé de manière à leur appliquer un signal d'excitation de cette première vibration.

En outre, les moyens de mesure d'un tel dispositif comportent des électrodes de détection disposées sur le transducteur de manière à produire un signal de détection en réponse à la deuxième vibration de ce transducteur. Ces moyens de mesure comportent en outre un circuit électronique qui répond à ce signal de détection pour produire le signal de mesure représentatif de la vitesse angulaire du transducteur.

Il est bien connu que la deuxième vibration du transducteur d'un dispositif de mesure d'une vitesse angulaire comporte une composante utile dont l'amplitude est représentative de la vitesse angulaire de ce transducteur, ainsi qu'une composante parasite dont l'amplitude ne dépend pas de la vitesse angulaire du transducteur.

Le signal de détection mentionné ci-dessus comporte donc également une composante utile et une composante parasite qui sont respectivement représentatives de l'amplitude de la composante utile et de celle de la composante parasite de cette deuxième vibration.

Dans les dispositifs connus tels que celui qui est décrit dans le brevet US-A-4 671 112, le signal de détection est appliqué à un circuit mélangeur après avoir été amplifié dans un amplificateur de découplage. Le signal d'excitation du transducteur est également appliqué à ce circuit mélangeur après avoir aussi été amplifié par un amplificateur de découplage.

Le signal produit par ce mélangeur est ensuite appliqué à un filtre passe-bas dont la sortie produit un signal continu qui est le signal de mesure de la vitesse angulaire du transducteur. Mais ce signal, s'il comporte effectivement une première composante représentative de la composante utile du signal de détection fourni par le transducteur, et donc de la vitesse angulaire de ce dernier, comporte également une deuxième composante qui est représentative de la composante parasite de ce signal de détection.

Il est cependant bien connu que l'amplitude de la composante utile de la deuxième vibration du transducteur d'un dispositif de mesure d'une vitesse angulaire peut être très faible, notamment lorsque cette vitesse angulaire de ce transducteur est faible, et que, dans un tel cas, l'amplitude de la composante parasite de cette deuxième vibration est beaucoup plus importante que celle de cette composante utile.

Il en est évidemment de même des composantes utile et parasite du signal de détection produit par les électrodes de détection de la deuxième vibration du transducteur.

Ainsi, par exemple, lorsque le transducteur d'un dispositif de mesure d'une vitesse angulaire est constitué par un diapason en quartz, comme c'est le cas dans de nombreux dispositifs de ce genre, la composante utile du signal de détection a une amplitude de l'ordre du dixième de millivolt, ou tout au plus, de quelques dixièmes de millivolt, lorsque la vitesse angulaire du diapason est de l'ordre de quelques degrés par seconde, alors que la composante parasite de ce signal de détection est de l'ordre de quelques dizaines, voire même de quelques centaines de millivolts.

Il en découle que la valeur de la première composante du signal fourni par le filtre d'un dispositif tel que celui qui est décrit dans le brevet US-A-4 671 112 mentionné ci-dessus est très faible, et que la valeur de la deuxième composante de ce signal est beaucoup plus grande que celle de cette première composante lorsque la vitesse angulaire du transducteur est faible.

La sensibilité d'un tel dispositif de mesure est donc faible.

Il faut noter que cette sensibilité ne peut pas être augmentée en augmentant le gain de l'amplificateur de découplage, mentionné ci-dessus, qui amplifie le signal de détection avant qu'il soit appliqué au circuit mélangeur, puisque cet amplificateur amplifie de la même manière les deux composantes de ce signal de détection.

En outre, le gain de cet amplificateur doit évidemment être inférieur à celui pour lequel sa sortie se sature. L'amplificateur de la composante parasite du signal de détection étant relativement élevée comme on l'a vu ci-dessus, ce gain ne peut être que relativement faible. Il en résulte que, même après avoir été amplifiée par cet amplificateur, la composante utile du signal de détection a une amplitude faible lorsque la vitesse angulaire du transducteur est faible.

Il est également bien connu que l'amplitude de la composante parasite de la deuxième vibration du transducteur varie en fonction de la température de ce dernier, alors que l'amplitude de la composante utile de cette deuxième vibration est pratiquement indépendante de cette température. Le signal fourni par un dispositif tel que celui qui est décrit dans le brevet US-A-4 671 112 est donc également variable en fonction de la température.

Il est aussi bien connu que la composante parasite de la deuxième vibration du transducteur est sensiblement en phase avec la première vibration de ce transducteur, alors que la composante utile de cette deuxième vibration est sensiblement en quadrature de phase avec cette première vibration.

Les composantes parasite et utile du signal de détection sont donc également en phase et, respectivement, en quadrature de phase avec le signal d'excitation de la première vibration du transducteur.

Il serait donc possible de remplacer, dans un dispositif tel que celui qui est décrit dans le brevet US-A-4 671 112, le circuit mélangeur par un circuit démodulateur en quadrature de phase, qui est un circuit bien connu dont la sortie fournit un signal représentatif de la composante d'un signal appliqué à son entrée qui est en quadrature de phase avec un signal de référence.

Grâce à cette modification de ce dispositif, le signal qu'il fournirait ne serait effectivement représentatif que de la composante utile du signal de détection.

Mais, comme cela a déjà été mentionné, cette composante utile a une amplitude très faible lorsque la vitesse angulaire du transducteur est faible. Il en serait donc de même du signal fourni par un dispositif ainsi modifié, et il serait nécessaire d'amplifier fortement ce signal si ce dispositif était destiné à mesurer des vitesses angulaires faibles. L'amplificateur qu'il faudrait alors prévoir serait assez difficile à réaliser, et donc assez cher, puisque le signal qu'il devrait amplifier est un signal continu de faible valeur et que les caractéristiques de cet amplificateur devraient être très stables en fonction de la température.

Diverses solutions ont été proposées pour résoudre le problème posé par cette faible sensibilité et par cette instabilité en fonction de la température.

Ainsi, par exemple, le brevet US-A-5 287 745 décrit un dispositif de mesure d'une vitesse angulaire dont le signal de sortie est obtenu à partir de la mesure du déphasage entre le signal d'excitation de la première vibration de son transducteur et le signal de détection de la deuxième vibration de ce dernier. En outre, la sensibilité de ce dispositif est augmentée, dans une de ses formes d'exécution, grâce au fait qu'il comporte une mémoire dans laquelle est enregistrée la valeur du déphasage mentionné ci-dessus lorsque la vitesse angulaire du transducteur est nulle, valeur qui est évidemment représentative de l'amplitude de la composante parasite du signal de détection. Ce dispositif comporte en outre un circuit qui soustrait en permanence cette valeur mémorisée de la valeur mesurée, de sorte que le signal fourni par ce dernier circuit ne dépend que de l'amplitude de la composante utile du signal de détection.

Ce dispositif est relativement complexe car il doit utiliser une base de temps très stable pour mesurer le déphasage mentionné ci-dessus. En outre, il produit un signal de mesure qui est numérique. Or les dispositifs auxquels un signal de mesure d'une vitesse angulaire doit être fourni sont souvent des dispositifs de nature analogique. Dans de tels cas, le dispositif décrit par le brevet US-A-5 287 745 ci-dessus doit être complété par un convertisseur numérique/analogique, qui est un circuit relativement complexe et dont la stabilité en fonction de la température ne peut être assurée qu'au prix d'une augmentation supplémentaire de sa complexité.

Le brevet US-A-5 329 816 décrit un dispositif de mesure d'une vitesse angulaire dont le transducteur a la forme d'un diapason ayant deux branches réunies par une base.

Ce transducteur comporte six électrodes, isolées les unes des autres, disposées sur une première branche du diapason et formant deux groupes distincts d'électrodes d'excitation de sa première vibration.

Un groupe d'électrodes de détection est disposé sur la deuxième branche du diapason de manière à produire le signal de détection représentatif de la vitesse angulaire du transducteur en réponse à la deuxième vibration de celui-ci.

En outre, un groupe d'électrodes, dites de contre-réaction, est disposé, également sur la deuxième branche du diapason, de manière à produire un signal de contre-réaction en réponse à la première vibration du transducteur.

Le circuit électronique du dispositif décrit par ce brevet US-A-5 329 816 comporte un circuit démodulateur et un filtre passe-bas classiques fournissant le signal de mesure de la vitesse angulaire du transducteur en réponse aux signaux de détection et de contre-réaction mentionnés ci-dessus.

Ce circuit comporte encore un deuxième circuit démodulateur qui reçoit également les signaux de détection et de contre-réaction et qui fournit un signal de commande à un oscillateur commandé ayant deux sorties réunies chacune à un des groupes d'électrodes d'excitation du transducteur.

La constitution et le fonctionnement de cet oscillateur commandé ne sont pas décrits dans ce document, seules quelques explications succinctes étant données sur l'effet qui est recherché et qui devrait être obtenu grâce à la séparation des électrodes d'excitation en deux groupes distincts et à la présence des électrodes de contre-réaction. Cependant, le spécialiste peut déduire de ces explications que cet oscillateur devrait fournir aux deux groupes d'électrodes d'excitation du transducteur des signaux d'excitation différents, la différence entre ces signaux dépendant du signal de contre-réaction, dans le but de modifier la première vibration du transducteur de manière qu'elle comporte une composante qui contre-balance la composante parasite de la deuxième vibration de ce transducteur. Mais on ne voit pas comment ce but peut être atteint, puisque le signal de contre-réaction agissant sur l'oscillateur est produit en réponse à la première vibration du transducteur, et qu'il est donc indépendant de la deuxième vibration de celui-ci.

De toute manière, l'oscillateur commandé qui est nécessaire dans ce dispositif est relativement compliqué à réaliser, et donc relativement cher, du fait qu'il doit fournir deux signaux différents dont un au moins doit être variable. En outre, le transducteur utilisé dans ce dispositif est également relativement compliqué, et donc relativement cher, du fait qu'il doit comprendre deux groupes d'électrodes d'excitation de sa première vibration.

Un but de la présente invention est de proposer un dispositif de mesure d'une vitesse angulaire qui peut avoir une sensibilité beaucoup plus grande que celle des dispositifs connus et qui fournit un signal de mesure pratiquement indépendant de la température, tout en utilisant un transducteur et un circuit électronique relativement simples et donc bon marché.

Ce but est atteint par le dispositif selon la présente invention, qui est un dispositif de mesure d'une vitesse angulaire comportant :
- un transducteur piézo-électrique destiné à tourner à ladite vitesse angulaire;
- des premiers moyens d'excitation pour exciter une première vibration dudit transducteur à une fréquence déterminée et dans une première direction;
- des moyens de mesure pour produire un signal de mesure de ladite vitesse angulaire en réponse à une deuxième vibration dudit transducteur, ladite deuxième vibration étant due à ladite première vibration, ayant ladite fréquence déterminée et une deuxième direction perpendiculaire à ladite première direction, et comportant une composante utile dont l'amplitude est représentative de ladite vitesse angulaire et une composante parasite dont l'amplitude est indépendante de ladite vitesse angulaire;
et qui est caractérisé par le fait qu'il comporte en outre :
- des deuxièmes moyens d'excitation pour exciter une troisième vibration dudit transducteur à ladite fréquence déterminée, dans ladite deuxième direction et en opposition de phase avec ladite composante parasite de ladite deuxième vibration; et
- des moyens d'asservissement de l'amplitude de ladite troisième vibration à l'amplitude de ladite composante parasite de ladite deuxième vibration.

Comme cela sera décrit en détail plus loin, ces caractéristiques ont comme conséquence que le signal de détection produit par les électrodes de détection du transducteur de ce dispositif n'est constitué que de sa composante utile et ne comporte aucune composante parasite. Il est donc possible d'augmenter la sensibilité de ce dispositif en augmentant simplement le gain de l'amplificateur de découplage qui applique ce signal de détection au circuit de démodulation. En outre, ce signal de détection est indépendant de la température du transducteur, et il en est donc de même du signal de mesure fourni par le dispositif.

D'autres buts et avantages de la présente invention seront rendus évidents par la description d'une de ses formes d'exécution qui va suivre et qui sera faite à l'aide du dessin annexé dans lequel :
- la figure 1 est un schéma-bloc de cette forme d'exécution d'un dispositif de mesure d'une vitesse angulaire; et
- la figure 2 est une vue schématique d'un transducteur utilisable dans le dispositif de la figure 1.

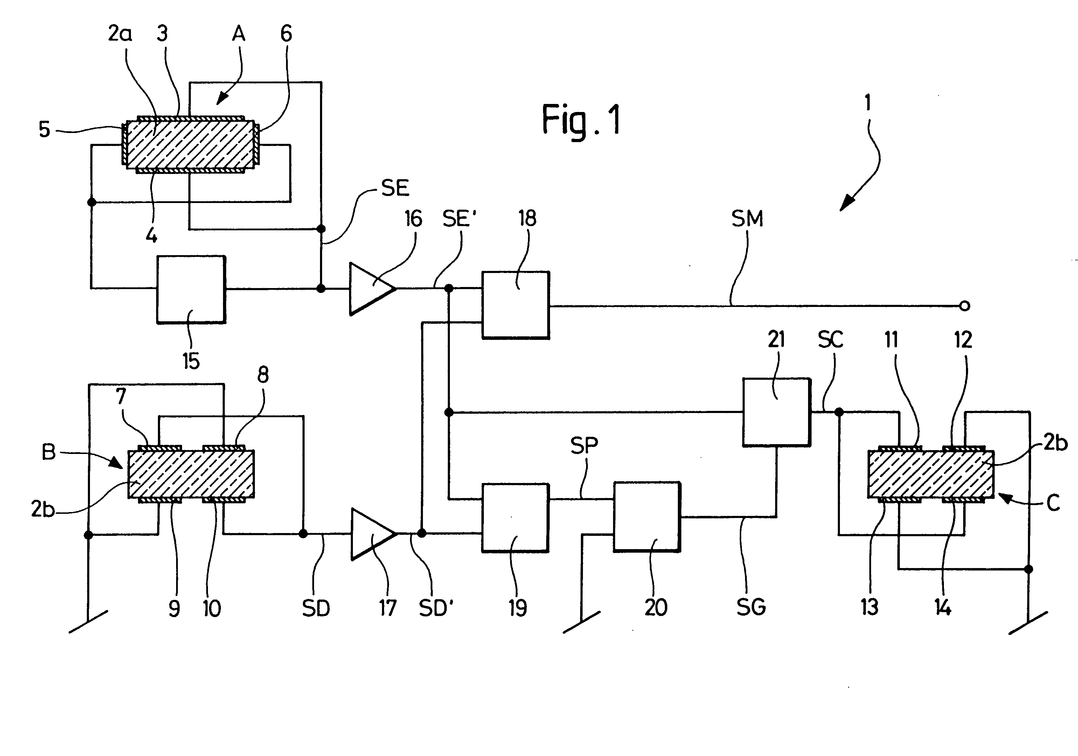

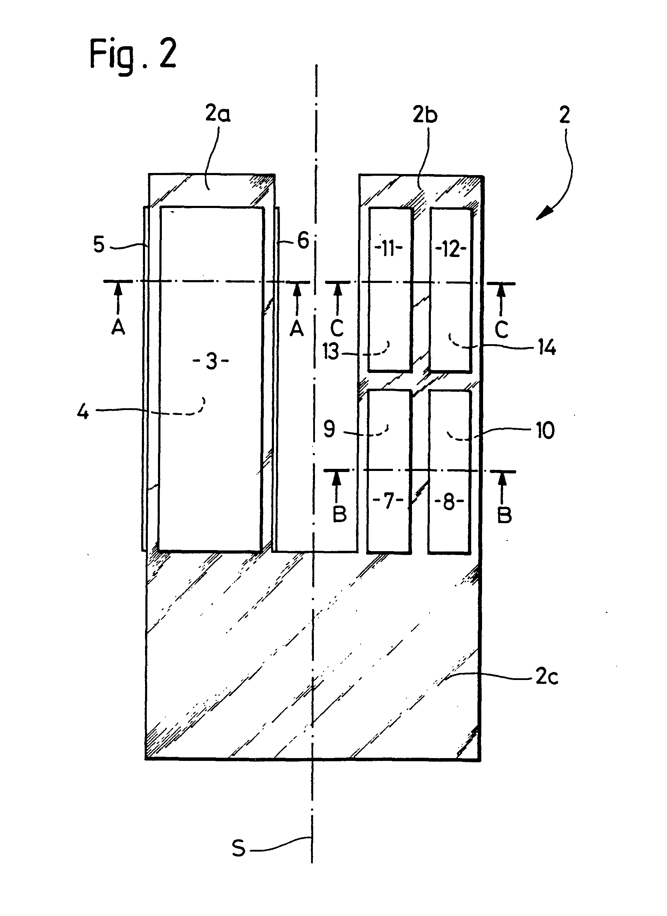

Dans sa forme d'exécution représentée à titre d'exemple non limitatif à la figure 1, le dispositif de mesure d'une vitesse angulaire selon la présente invention, qui est désigné par la référence générale 1, comporte un transducteur constitué par un diapason 2 à deux branches 2a et 2b réunies par une base commune 2c (voir la figure 2).

Dans cet exemple, le diapason 2 a été découpé, de manière classique, dans une plaquette de quartz dont les faces sont sensiblement perpendiculaires à l'axe optique Z du quartz, et la direction de la longueur de ses branches 2a et 2b est sensiblement parallèle à l'axe mécanique Y du quartz. Les angles formés par les faces de la plaquette du quartz et l'axe Z de ce dernier, et respectivement par la direction de la longueur des branches 2a et 2b et l'axe Y du quartz sont déterminés, de façon bien connue, par les caractéristiques que le diapason 2 doit avoir.

De manière classique, le diapason 2 comporte des électrodes d'excitation d'une première vibration de ses branches 2a et 2b, qui sont constituées par deux électrodes 3 et 4 disposées en regard l'une de l'autre chacune sur une des faces principales de la branche 2a, et par deux électrodes 5 et 6 disposées également en regard l'une à l'autre chacune sur une des faces latérales de la même branche 2a. Des pistes conductrices, non représentées, relient d'une part les électrodes 3 et 4 l'une à l'autre et à une borne de connexion située sur la base 2c du diapason 2 et, d'autre part, les électrodes 5 et 6 l'une à l'autre et à une autre borne de connexion également située sur la base 2c, ces deux bornes de connexion n'étant pas non plus représentées.

L'homme du métier verra facilement que les électrodes 3 à 6 qui viennent d'être décrites sont destinées à exciter une vibration de flexion des branches 2a et 2b du diapason 2 dans une direction parallèle aux plans de leurs faces principales et à une fréquence qui est déterminée essentiellement par leurs dimensions. C'est cette vibration de flexion de ces branches 2a et 2b qui constitue la première vibration du diapason 2.

Il est bien connu que cette première vibration du diapason 2 engendre une deuxième vibration de celui-ci, qui est également une vibration de flexion des branches 2a et 2b, mais dans une direction perpendiculaire aux plans de leurs faces principales, c'est-à-dire perpendiculaire à la direction de la première vibration, et que cette deuxième vibration a la même fréquence que la première.

Cette deuxième vibration comporte une première composante qui est due aux forces de Coriolis qui s'exercent sur les branches 2a et 2b lorsque celles-ci vibrent selon la première vibration définie ci-dessus et que le diapason 2 tourne autour de son axe de sensibilité désigné par la référence S à la figure 2. L'amplitude de cette première composante est donc représentative de la vitesse angulaire du diapason 2 autour de l'axe de sensibilité S, et cette première composante est la composante utile de la deuxième vibration de ce diapason 2.

Il est également bien connu que la deuxième vibration du diapason 2 comporte aussi une deuxième composante, qui n'est due qu'à l'anisotropie des caractéristiques mécaniques du quartz et dont l'amplitude est indépendante de la vitesse angulaire du diapason 2 mais varie, par contre, en fonction de la température. Cette deuxième composante est généralement appelée composante parasite de la deuxième vibration.

Dans le dispositif 1 de la figure 1, le diapason 2 vibre encore selon une troisième vibration dont on verra plus loin comment elle est excitée. On mentionnera simplement ici que cette troisième vibration est également une vibration de flexion des branches 2a et 2b du diapason 2 dans une direction qui est également perpendiculaire aux plans de leurs faces principales, et qui est donc la même que celle de la deuxième vibration mentionnée ci-dessus. En outre, cette troisième vibration a la même fréquence que la première et la deuxième vibration.

Le diapason 2 comporte encore deux électrodes 7 et 8 disposées côte-à-côte sur une des faces principales de la branche 2b et occupant environ la première moitié de la longueur de celle-ci, et deux électrodes 9 et 10 disposées sur l'autre face principale de la branche 2b en regard des électrodes 7 et, respectivement 8. Des pistes conductrices, non représentées, relient d'une part les électrodes 7 et 10 l'une à l'autre et à une borne de connexion disposée sur la base 2c du diapason 2, et, d'autre part, les électrodes 8 et 9 l'une à l'autre et à une autre borne de connexion également disposée sur la base 2c. Ces deux bornes de connexion n'ont pas non plus été représentées.

L'homme du métier verra facilement que les électrodes 7 à 10 qui viennent d'être décrites sont des électrodes de détection destinées à produire un signal en réponse à toute flexion de la branche 2b dans une direction perpendiculaire aux plans de ses faces principales.

Dans le cas présent, ces électrodes 7 à 10 sont donc destinées à produire un signal, qui sera appelé signal de détection SD, en réponse à la superposition de la deuxième et la troisième vibration du diapason 2 qui ont été décrites ci-dessus.

Le diapason 2 comporte encore quatre électrodes 11, 12, 13 et 14 également disposées sur la branche 2b, qui s'étendent respectivement dans le prolongement des électrodes de détection 7, 8, 9 et 10 et occupent environ la deuxième moitié de la longueur de cette branche 2b. Des pistes conductrices, non représentées, relient d'une part les électrodes 11 et 14 l'une à l'autre et à une borne de connexion située sur la base 2c du diapason 2 et, d'autre part, les électrodes 12 et 13 l'une à l'autre et à une autre borne de connexion également située sur la base 2c, ces deux bornes de connexion n'étant pas non plus représentées.

Ces électrodes 11 à 14 sont destinées à exciter la troisième vibration du diapason 2 mentionnée ci-dessus, d'une manière qui sera précisée plus loin.

Les références A, B et C indiquées dans la figure 1 désignent respectivement une coupe schématique de la branche 2a et des électrodes 3 à 6 faite selon le plan A-A de la figure 2, une coupe schématique de la branche 2b et des électrodes 7 à 10 faite selon le plan B-B de la figure 2, et une coupe schématique de la branche 2b et des électrodes 11 et 14 faite selon le plan C-C de la figure 2.

La figure 1 montre notamment que le dispositif 1 de mesure d'une vitesse angulaire selon la présente invention comporte, de manière classique, un circuit d'entretien de la première vibration du diapason 2, qui est désigné par la référence 15 et dont l'entrée et la sortie sont reliées aux électrodes 5 et 6 et, respectivement aux électrodes 3 et 4.

Ce circuit d'entretien 15 ne sera pas décrit en détail car il peut être réalisé de diverses manières bien connues de l'homme du métier.

Le signal SE appliqué par la sortie du circuit d'entretien 15 aux électrodes 3 et 4 sera appelé signal d'excitation de la première vibration du diapason 2. Ce signal SE a évidemment la même fréquence que la première vibration du diapason 2.

On voit encore sur la figure 1 que les électrodes 8 et 9 faisant partie des électrodes de détection décrites ci-dessus sont reliées à la masse du dispositif 1, c'est-à-dire à celle des bornes de la source de tension, non représentée, qui alimente ce dispositif 1 dont le potentiel est choisi arbitrairement comme potentiel de référence. Le signal de détection SD mentionné ci-dessus est donc celui qui est fourni par les deux autres électrodes de détection 7 et 10.

Comme cela a déjà été mentionné, ce signal SD est produit en réponse à la superposition de la deuxième et de la troisième vibration du diapason 2 et a donc la même fréquence que ces dernières. Il comporte en outre trois composantes qui sont respectivement représentatives de la composante utile de la deuxième vibration, de la composante parasite de cette deuxième vibration, et de la troisième vibration. Ces trois composantes du signal SD, qui ont la même fréquence que ce dernier et donc que le signal SE, seront appelées par analogie composante utile, composante parasite, et troisième composante de ce signal SD.

On verra en détail plus loin que la troisième vibration du diapason 2 est en opposition de phase avec la composante parasite de la deuxième vibration. Il en est donc de même de la composante parasite et de la troisième composante du signal SD. Pour simplifier la description qui va suivre, la combinaison de ces deux dernières composantes sera appelée composante combinée du signal SD.

Il est bien connu que la composante utile du signal de détection SD est sensiblement en quadrature de phase avec le signal SE d'excitation de la première vibration, c'est-à-dire que la différence de phase entre cette composante utile et ce signal SE est sensiblement égale à ± 90°, le signe de cette différence de phase dépendant de la disposition et du branchement des électrodes 3 à 6 et 7 à 10 et, pour une disposition et un branchement donnés, du sens de la rotation du diapason 2 autour de son axe de sensibilité S.

De même, il est bien connu que la composante parasite du signal de détection SD est sensiblement en phase ou en opposition de phase avec le signal d'excitation SE, à nouveau selon la disposition et le branchement des électrodes 3 à 6 et 7 à 10.

Dans la suite de cette description, on admettra que ces électrodes 3 à 6 et 7 à 10 sont disposées et branchées de manière que la composante parasite du signal SD soit en phase avec le signal SE.

Il en résulte que la composante combinée du signal SD qui a été définie ci-dessus est en phase avec ce signal SE si l'amplitude de la composante parasite de ce signal SD est plus grande que celle de la troisième composante de ce dernier, et en opposition de phase avec ce signal SE dans le cas contraire.

Le signal SE d'excitation de la première vibration du diapason appliqué par le circuit 15 aux électrodes 3 et 4 est également appliqué à l'entrée d'un amplificateur de découplage 16 dont la sortie fournit un signal SE' qui est proportionnel à ce signal d'excitation SE et en phase avec celui-ci.

De même, le signal de détection SD est appliqué à un amplificateur de découplage 17 dont la sortie fournit un signal SD' qui est proportionnel à ce signal de détection SD et en phase avec celui-ci. Ce signal SD' comporte évidemment une composante utile et une composante combinée qui sont respectivement proportionnelles à la composante utile et à la composante combinée du signal SD et qui sont respectivement en phase avec ces dernières.

Toujours de manière classique, les signaux SE' et SD' sont appliqués aux entrées d'un circuit démodulateur en quadrature de phase 18 dont la sortie constitue la sortie du dispositif 1 et fournit le signal SM de mesure de la vitesse angulaire du diapason 2.

Le circuit 18 ne sera pas décrit en détail car il peut être réalisé de diverses manières bien connues de l'homme du métier. On rappellera simplement qu'un circuit démodulateur en quadrature de phase est un circuit dont la sortie fournit un signal continu ayant une valeur représentative de l'amplitude de la composante d'un signal d'entrée qui est en quadrature de phase avec un signal de référence, le signe de ce signal continu dépendant du signe de la différence de phase entre ces deux signaux.

Dans le présent exemple, le signal de référence est le signal SE', le signal d'entrée est le signal SD', et la composante de ce signal d'entrée qui est en quadrature de phase avec le signal de référence est la composante utile de ce signal SD'. Le signal SM fourni par le circuit 18 et son signe sont donc représentatifs de l'amplitude de cette composante utile du signal SD' et, respectivement, du signe de la différence de phase entre cette composante utile et le signal SE'. Ce signal SM est donc aussi représentatif de la vitesse angulaire du diapason 2 autour de son axe de sensibilité S et du sens de cette vitesse angulaire.

Les signaux SE' et SD' sont également appliqués aux entrées d'un circuit démodulateur en phase 19 dont la sortie fournit un signal SP.

Ce circuit 19 ne sera pas non plus décrit en détail car il s'agit également d'un circuit bien connu de l'homme du métier.

On rappellera simplement qu'un circuit démodulateur en phase est un circuit dont la sortie fournit un signal continu ayant une valeur représentative de l'amplitude de la composante d'un signal d'entrée qui est en phase ou en opposition de phase avec un signal de référence, ce signal continu étant positif ou négatif selon que cette composante est, par exemple, en phase ou en opposition de phase avec ce signal de référence. Dans le présent exemple, le signal de référence est également le signal SE', le signal d'entrée est également le signal SD', et la composante de ce signal d'entrée qui est en phase ou en opposition de phase avec ce signal de référence est la composante combinée de ce signal SD'. La valeur de ce signal SP est donc représentative de l'amplitude de cette composante combinée, et son signe est positif ou négatif selon que cette composante combinée est en phase ou en opposition de phase avec le signal SE'.

Le signal SP produit par le circuit 19 est appliqué à une première entrée d'un circuit de réglage 20 ayant une deuxième entrée reliée à la masse et une sortie fournissant un signal SG qui a une valeur constante lorsque le signal SP a une valeur nulle, et qui augmente ou diminue lorsque le signal SP est positif ou, respectivement négatif.

Ce circuit 20 ne sera pas décrit plus en détail car il peut être réalisé de diverses manières bien connues de l'homme du métier. On mentionnera simplement qu'un tel circuit de réglage comporte généralement un circuit comparateur des deux signaux appliqués à ses entrées et un circuit intégrateur du signal produit par ce comparateur, ainsi que divers composants destinés à lui donner les caractéristiques désirées et à assurer la stabilité de son fonctionnement.

Le dispositif 1 comporte encore un amplificateur 21 dont l'entrée reçoit le signal SE' fourni par l'amplificateur 16, dont la sortie est reliée aux électrodes 11 et 14 disposées sur la branche 2b du diapason 2, et dont le gain est variable en fonction de la valeur du signal SG qui est appliqué à une entrée de commande.

Les électrodes 12 et 13 également disposées sur la branche 2b du diapason 2 sont reliées à la masse du dispositif 1.

Le signal SE' appliqué à l'entrée de l'amplificateur 21 est évidemment un signal alternatif ayant le même fréquence que la première vibration du diapason 2. Le signal SC appliqué aux électrodes 11 et 14 est donc également alternatif, et sa fréquence est aussi égale à celle de la première vibration du diapason 2.

Comme on le voit facilement, ce signal SC excite une vibration de la branche 2b, et donc également de la branche 2a du diapason 2. La disposition des électrodes 11 à 14 a comme conséquence que cette vibration est une vibration de flexion des branches 2a et 2b du diapason 2 dans une direction perpendiculaire aux plans de leurs faces principales.

En outre, ces électrodes 11 à 14 sont reliées à l'amplificateur 21, et ce dernier est agencé, de manière que cette troisième vibration soit en opposition de phase avec la deuxième vibration du diapason 2.

C'est donc cette vibration produite en réponse au signal SC appliqué par l'amplificateur 21 qui est la troisième vibration du diapason 2 mentionnée ci-dessus.

Lorsque le dispositif 1 fonctionne, le circuit d'entretien 15 excite la première vibration du diapason 2 et donc, indirectement la deuxième vibration de celui-ci.

Le circuit démodulateur 18 produit donc, de manière classique, le signal SM de mesure de la vitesse angulaire du diapason 2, en réponse aux signaux SE' et SD'.

Le fonctionnement du reste du dispositif 1 va maintenant être décrit en admettant, pour commencer, que le signal SG qui commande le gain de l'amplificateur 21 a justement la valeur pour laquelle l'amplitude du signal SC est telle que la troisième vibration du diapason 2 a une amplitude égale à celle de la composante parasite de la deuxième vibration de celui-ci. Cette troisième vibration et cette composante parasite étant en opposition de phase comme cela a été mentionné ci-dessus, la composante combinée du signal SD et celle du signal SD' ont donc une amplitude nulle. Le signal SP a donc une valeur nulle, de sorte que le signal SG ne varie pas et garde sa valeur mentionnée ci-dessus.

La boucle formée par le diapason 2, les électrodes 7 à 10, l'amplificateur 17, le démodulateur 19, le circuit de réglage 20, l'amplificateur 21 et les électrodes 11 à 14 est donc dans un état stable.

Si maintenant l'amplitude de la composante parasite de la deuxième vibration du diapason 2 augmente pour une raison quelconque, par exemple suite à une variation de la température de ce diapason 2, l'amplitude des composantes combinées des signaux SD et SD', qui était nulle, augmente, dans un premier temps tout au moins. En outre, ces composantes combinées sont alors en phase avec les signaux SE et SE'.

Il en découle que la valeur du signal SP, qui était nulle, devient positive. La valeur du signal SG commence donc à augmenter, de même que l'amplitude du signal SC et, donc, de la troisième vibration du diapason 2.

Cette augmentation de l'amplitude de cette troisième vibration entraîne une diminution de celle des composantes combinées des signaux SD et SD', et donc une diminution de la valeur du signal SP.

Tant que ce signal SP reste positif, la valeur du signal SG continue à augmenter, de même que l'amplitude du signal SC et de la troisième vibration du diapason 2.

Mais lorsque cette amplitude de cette troisième vibration devient égale à celle de la composante parasite de la deuxième vibration du diapason 2, les amplitudes des composantes combinées des signaux SD et SD' deviennent à nouveau nulles, de même que la valeur du signal SP. Le signal SG cesse de croître, et la boucle définie ci-dessus se retrouve dans un nouvel état stable.

On voit facilement qu'un processus analogue se déroule si l'amplitude de la composante parasite de la deuxième vibration du diapason 2 diminue pour une raison quelconque. Dans un tel cas, l'amplitude des composantes combinées des signaux SD et SD' augmente également, mais ces composantes combinées sont alors en opposition de phase avec les signaux SE et SE'.

La valeur du signal SP devient donc négative, de sorte que la valeur du signal SG diminue, ce qui entraîne une diminution de l'amplitude du signal SC et, donc, de la troisième vibration du diapason 2.

Lorsque cette amplitude de cette troisième vibration devient égale à celle de la composante parasite de la deuxième vibration du diapason 2, la boucle définie ci-dessus se retrouve à nouveau dans un état stable.

On voit que cette boucle définie ci-dessus asservit l'amplitude de la troisième vibration à l'amplitude de la composante parasite de la deuxième vibration du diapason 2, quelle que soit cette dernière amplitude et quelles que soient ses variations et la cause de celles-ci.

On voit en outre que cet asservissement a comme effet que les composantes combinées des signaux SD et SD' ont toujours une amplitude nulle sauf pendant le temps qui est nécessaire pour que le processus décrit ci-dessus se déroule.

Mais, si les caractéristiques des divers circuits formant la boucle d'asservissement, et notamment celles du circuit de réglage 20, sont choisies judicieusement, ce qui est à la portée de l'homme du métier, ce temps nécessaire au déroulement du processus ci-dessus peut être rendu très court, d'autant plus que les variations de l'amplitude de la composante parasite de la deuxième vibrations du diapason 2 ne sont jamais très rapides.

On voit que l'amplitude de la composante combinée des signaux SD et SD' est pratiquement toujours nulle, et que ces signaux ne sont donc pratiquement constitués que par leur composante utile.

Ces deux signaux SD et SD' sont donc pratiquement indépendants de l'amplitude de la composante parasite de la deuxième vibration du diapason 2 et des variations de cette composante parasite, ce qui représente un avantage très important du dispositif selon la présente invention par rapport aux dispositifs connus.

On voit également qu'il est facile d'augmenter la sensibilité du dispositif de mesure de la présente invention si celui-ci est destiné à mesurer des vitesses angulaires faibles. Dans un tel cas, il suffit de donner à l'amplificateur 17 un gain suffisamment élevé pour que la composante utile du signal SD', qui est pratiquement la seule composante de ce signal, ait une amplitude telle que le signal de mesure SM puisse être utilisé directement, sans nécessiter d'amplification par un amplificateur à courant continu relativement difficile à réaliser.

On voit en outre que ces avantages du dispositif selon la présente invention sont indépendants des variations éventuelles des caractéristiques des divers circuits formant la boucle d'asservissement mentionnée ci-dessus. Le fonctionnement d'un tel dispositif est donc nettement plus stable que celui des dispositifs connus.

De plus, tous les circuits utilisés dans un dispositif selon la présente invention sont bien connus et relativement simples. De même, le transducteur d'un tel dispositif est plus simple à réaliser, et donc moins cher, que celui du dispositif décrit dans le brevet US-A-5 329 816 du fait qu'il ne comporte qu'un seul jeu d'électrodes d'excitation de sa première vibration.

On peut noter à ce propos que la fabrication du diapason 2 utilisé dans le dispositif 1 décrit ci-dessus peut être encore simplifiée en réalisant en une seule pièce les électrodes 8 et 12 d'une part et 9 et 13 d'autre part, puisque, dans cet exemple, ces quatre électrodes sont reliées à la masse du dispositif 1. Cette simplification permet en outre de supprimer une des deux bornes de connexion qui sont reliées à ces électrodes dans cet exemple.

De nombreuses modifications peuvent être apportées au dispositif qui vient d'être décrit, sans que celui-ci sorte pour autant du cadre de la présente invention.

Ainsi, par exemple, les diverses électrodes du diapason 2 peuvent être disposées de manière que la direction de sa première vibration soit perpendiculaire aux plans de ses faces principales et que la direction de sa deuxième et de sa troisième vibration soit parallèle à ces plans.

De même, ces diverses électrodes peuvent être réparties sur les branches 2a et 2b du diapason d'une manière différente de celle qui a été décrite. Par exemple, les électrodes d'excitation de la première vibration et les électrodes d'excitation de la troisième vibration peuvent être disposées sur l'une de ces branches, les électrodes de détection de la deuxième et de la troisième vibration étant alors disposées sur l'autre de ces branches.

Toujours par exemple, le diapason 2 qui est utilisé comme transducteur dans le dispositif 1 décrit ci-dessus peut être remplacé par n'importe quel autre transducteur utilisable dans un tel dispositif.

## Revendications

1. Dispositif de mesure d'une vitesse angulaire comportant :
- un transducteur piézo-électrique (2) destiné à tourner à ladite vitesse angulaire;
- des premiers moyens d'excitation (3 à 6, 15) pour exciter une première vibration dudit transducteur (2) à une fréquence déterminée et dans une première direction;
- des moyens de mesure (7 à 10, 16 à 18) pour produire un signal de mesure (SM) de ladite vitesse angulaire en réponse à une deuxième vibration dudit transducteur (2), ladite deuxième vibration étant due à ladite première vibration, ayant ladite fréquence déterminée et une deuxième direction perpendiculaire à ladite première direction, et comportant une composante utile dont l'amplitude est représentative de ladite vitesse angulaire et une composante parasite dont l'amplitude est indépendante de ladite vitesse angulaire;
**caractérisé par** le fait qu'il comporte en outre :
- des deuxièmes moyens d'excitation (11 à 14, 21) pour exciter une troisième vibration dudit transducteur (2) à ladite fréquence déterminée, dans ladite deuxième direction et en opposition de phase avec ladite composante parasite de ladite deuxième vibration; et
- des moyens d'asservissement (19, 20) de l'amplitude de ladite troisième vibration à l'amplitude de ladite composante parasite de ladite deuxième vibration.

2. Dispositif selon la revendication 1, **caractérisé par** le fait que :
- lesdits premiers moyens d'excitation (3 à 6, 15) comportent des premières électrodes d'excitation (3 à 6) disposées sur ledit transducteur (2) et un circuit d'entretien (15) couplé auxdites premières électrodes pour fournir un premier signal d'excitation (SE);
- lesdits moyens de mesure (7 à 10, 16 à 18) comportent des électrodes de détection (7 à 10) disposées sur ledit transducteur (2) pour produire un signal de détection (SD) en réponse à ladite deuxième vibration et à ladite troisième vibration, ledit signal de détection (SD) ayant une composante utile représentative de ladite composante utile de ladite deuxième vibration et une composante combinée représentative de la combinaison de ladite troisième vibration avec ladite composante parasite de ladite deuxième vibration, et des moyens (16 à 18) répondant à ladite composante utile dudit signal de détection (SD) et audit signal d'excitation (SE) pour produire ledit signal de mesure (SM);
- lesdits deuxièmes moyens d'excitation (11 à 14, 21) comportent des deuxièmes électrodes d'excitation (11 à 14) et un circuit amplificateur à gain réglable (21) répondant audit premier signal d'excitation (SE) et à un signal de commande (SG) pour fournir auxdites deuxièmes électrodes d'excitation (11 à 14) un deuxième signal d'excitation (SC); et
- lesdits moyens d'asservissement (19, 20) comportent des moyens (19) répondant audit premier signal d'excitation (SE) et audit signal de détection (SD) pour produire un signal de mesure (SP) de ladite composante combinée dudit signal de détection (SD) et des moyens de réglage (20) répondant audit signal de mesure (SP) de ladite composante combinée pour produire ledit signal de commande (SG) avec une valeur telle que ladite troisième vibration a une amplitude égale à l'amplitude de ladite composante parasite de ladite deuxième vibration et que ledit signal de mesure (SP) de ladite composante combinée a une valeur nulle.

3. Dispositif selon la revendication 2, **caractérisé par** le fait que :
- ledit transducteur est constitué par un diapason (2) en quartz ayant une première (2a) et une deuxième branche (2b) réunies par une base (2c), les faces principales dudit diapason (2) étant sensiblement perpendiculaires à l'axe optique dudit quartz et la longueur desdites branches (2a, 2b) s'étendant sensiblement dans la direction de l'axe mécanique dudit quartz;
- lesdites premières électrodes d'excitation (3 à 6) comportent deux électrodes (3, 4) disposées en regard l'une de l'autre chacune sur une des faces principales de ladite première branche (2a) et reliées électriquement l'une à l'autre, et deux électrodes (5, 6) disposées en regard l'une de l'autre chacune sur une face latérale de ladite première branche (2a) et reliées électriquement l'une à l'autre;
- lesdites électrodes de détection (7 à 10) comportent une première (7) et une deuxième électrode (8) disposées côte-à-côte sur une des faces principales de ladite deuxième branche (2b) et s'étendant sensiblement sur la première moitié de la longueur de ladite deuxième branche (2b), et une troisième (9) et une quatrième électrode (10) disposées sur l'autre face principale de ladite deuxième branche (2b) en regard de ladite première (7) et, respectivement, de ladite deuxième électrode (8), ladite première (7) et ladite quatrième électrode (10) étant reliées électriquement l'une à l'autre et ladite deuxième (8) et ladite troisième électrode (9) étant reliées électriquement l'une à l'autre; et
- lesdites deuxièmes électrodes d'excitation (11 à 14) comportent une cinquième (11), une sixième (12), une septième (13) et une huitième électrode (14) disposées respectivement dans le prolongement de ladite première (7), de ladite deuxième (8), de ladite troisième (9) et de ladite quatrième électrode (10) et s'étendant sensiblement sur la deuxième moitié de ladite longueur de ladite deuxième branche (2b), ladite cinquième (11) et ladite huitième électrode (14) étant reliées électriquement l'une à l'autre et ladite sixième (12) et ladite septième électrode (13) étant reliées électriquement l'une à l'autre.

## Patentansprüche

1. Vorrichtung zum Messen einer Winkelgeschwindigkeit, umfassend:
- einen piezoelektrischen Meßwandler (2), der dazu bestimmt ist, sich mit der Winkelgeschwindigkeit zu drehen;
- erste Erregungsmittel (3 bis 6, 15) zum Erregen einer ersten Schwingung des Meßwandlers (2) mit einer bestimmten Frequenz und in einer ersten Richtung;
- Meßmittel (7 bis 10, 16 bis 18) zum Erzeugen eines Meßsignals (SM) der Winkelgeschwindigkeit als Antwort auf eine zweite Schwingung des Meßwandlers (2), wobei die zweite Schwingung durch die erste Schwingung bedingt ist und die bestimmte Frequenz sowie eine zur ersten Richtung senkrechte zweite Richtung besitzt und eine Nutzkomponente, deren Amplitude die Winkelgeschwindigkeit repräsentiert, sowie eine parasitäre Komponente, deren Amplitude von der Winkelgeschwindigkeit unabhängig ist, enthält;
**dadurch gekennzeichnet, daß** sie außerdem umfaßt:
- zweite Erregungsmittel (11 bis 14, 21) zum Erregen einer dritten Schwingung des Meßwandlers (2) mit der bestimmten Frequenz in der zweiten Richtung und mit einer zur parasitären Komponente der zweiten Schwingung entgegengesetzten Phase; und
- Mittel (19, 20) zum Einregeln der Amplitude der dritten Schwingung auf die Amplitude der parasitären Komponente der zweiten Schwingung.

2. Vorrichtung nach Anspruch 1, **dadurch gekennzeichnet, daß**:
- die ersten Erregungsmittel (3 bis 6, 15) erste Erregungselektroden (3 bis 6), die am Meßwandler (2) angeordnet sind, und eine Erhaltungsschaltung (15), die an die ersten Elektroden angeschlossen ist, um ein erstes Erregungssignal (SE) zu liefern, umfassen;
- die Meßmittel (7 bis 10, 16 bis 18) Erfassungselektroden (7 bis 10), die am Meßwandler (2) angeordnet sind, um als Antwort auf die zweite Schwingung und auf die dritte Schwingung ein Erfassungssignal (SD) zu erzeugen, wobei das Erfassungssignal (SD) eine Nutzkomponente, die die Nutzkomponente der zweiten Schwingung repräsentiert, sowie eine kombinierte Komponente, die die Kombination aus der dritten Schwingung und der parasitären Komponente der zweiten Schwingung repräsentiert, besitzt, sowie Mittel (16 bis 18), die auf die Nutzkomponente des Erfassungssignals (SD) und auf das Erregungssignal (SE) antworten, um das Meßsignal (SM) zu erzeugen, umfassen;
- die zweiten Erregungsmittel (11 bis 14, 21) zweite Erregungselektroden (11 bis 14) und eine Verstärkerschaltung mit einstellbarer Verstärkung (21), die auf das erste Erregungssignal (SE) und auf ein Steuersignal (SG) antworten, um an die zweiten Erregungselektroden (11 bis 14) ein zweites Erregungssignal (SC) zu liefern, umfassen; und
- die Regelungsmittel (19, 20) Mittel (19), die auf das erste Erregungssignal (SE) und auf das Erfassungssignal (SD) antworten, um ein Meßsignal (SP) der kombinierten Komponente des Erfassungssignals (SB) zu erzeugen, sowie Einstellmittel (20) umfassen, die auf das Meßsignal (SP) der kombinierten Komponente antworten, um das Steuersignal (SG) mit einem Wert zu erzeugen, derart, daß die dritte Schwingung eine Amplitude besitzt, die gleich der Amplitude der parasitären Komponente der zweiten Schwingung ist, und daß das Meßsignal (SP) der kombinierten Komponente einen Wert null hat.

3. Vorrichtung nach Anspruch 2, **dadurch gekennzeichnet, daß**:
- der Meßwandler durch eine Quarz-Stimmgabel (2) mit einem ersten Schenkel (2a) und einem zweiten Schenkel (2b), die durch eine Basis (2c) vereinigt sind, gebildet ist, wobei die Hauptflächen der Stimmgabel (2) zur optischen Achse des Quarzes im wesentlichen senkrecht sind und die Länge der Schenkel (2a, 2b) sich im wesentlichen in Richtung der mechanischen Achse des Quarzes erstrecken;
- die ersten Erregungselektroden (3 bis 6) zwei Elektroden (3, 4), die jeweils auf einer der Hauptflächen des ersten Schenkels (2a) einander gegenüber angeordnet und elektrisch miteinander verbunden sind, und zwei Elektroden (5, 6), die jeweils auf einer der Seitenflächen des ersten Schenkels (2a) einander gegenüber angeordnet und elektrisch miteinander verbunden sind, umfassen;
- die Erfassungselektroden (7 bis 10) eine erste Elektrode (7) und eine zweite Elektrode (8), die nebeneinander auf einer der Hauptflächen des zweiten Schenkels (2b) angeordnet sind und sich im wesentlichen über die erste Hälfte der Länge des zweiten Schenkels (2b) erstrecken, sowie eine dritte Elektrode (9) und eine vierte Elektrode (10), die auf der anderen Hauptfläche des zweiten Schenkels (2b) gegenüber der ersten Elektrode (7) bzw. der zweiten Elektrode (8) angeordnet sind, umfassen, wobei die erste Elektrode (7) und die vierte Elektrode (10) elektrisch miteinander verbunden sind und die zweite Elektrode (8) und die dritte Elektrode (9) elektrisch miteinander verbunden sind; und
- die zweiten Erregungselektroden (11 bis 14) eine fünfte Elektrode (11), eine sechste Elektrode (12), eine siebte Elektrode (13) und eine achte Elektrode (14) umfassen, die in der Verlängerung der ersten Elektrode (7), der zweiten Elektrode (8), der dritten Elektrode (9) bzw. der vierten Elektrode (10) angeordnet sind und sich im wesentlichen über die zweite Hälfte der Länge des zweiten Schenkels (2b) erstrecken, wobei die fünfte Elektrode (11) und die achte Elektrode (14) elektrisch miteinander verbunden sind und die sechste Elektrode (12) und die siebte Elektrode (13) elektrisch miteinander verbunden sind.

## Claims

1. Angular speed measuring device comprising :
- a piezoelectric transducer (2) intended to rotate at said angular speed;
- first excitation means (3 to 6, 15) for exciting a first vibration of said transducer (2) at a fixed frequency and in a first direction;
- measuring means (7 to 10, 16 to 18) for producing a measurement signal (SM) of said angular speed in response to a second vibration of said transducer (2), said second vibration being caused by said first vibration and having said fixed frequency and being in a second direction perpendicular to said first direction and comprising a useful component, the amplitude of which is representative of said angular speed, and a parasite component, the amplitude of which is independent of said angular speed,
**characterized by** the fact that the device further comprises :
- second excitation means (11 to 14, 21) for exciting a third vibration of said transducer (2) at said fixed frequency, in said second direction and in phase-opposition with said parasite component of said second vibration; and
- slave means (19, 20) for slaving the amplitude of said third vibration to the amplitude of said parasite component of said second vibration.

2. Device according to claim 1, **characterized by** the fact that :
- said first excitation means (3 to 6, 15) comprise first excitation electrodes (3 to 6) arranged on said transducer (2), and a maintenance circuit (15) coupled to said first electrodes for providing a first excitation signal (SE);
- said measuring means (7 to 10, 16 to 18) comprising detection electrodes (7 to 10) arranged on said transducer (2) for producing a detection signal (SD) in response to said second vibration and to said third vibration, said detection signal (SD) having a useful component representative of said useful component of said second vibration, and a combined component representative of the combination of said third vibration with said parasite component of said second vibration, and means (16 to 18) responsive to said useful component of said detection signal (SD) and to said excitation signal (SE) for producing said measurement signal (SM);
- said second excitation means (11 to 14, 21) comprising second excitation electrodes (11 to 14) and a variable gain amplifier circuit (21) responsive to said first excitation signal (SE) and to a control signal (SG) for providing to said second excitation electrodes (11 to 14) a second excitation signal (SC); and
- said slave means (19, 20) comprising means (19) responsive to said first excitation signal (SE) and to said detection signal (SD) for producing a measurement signal (SP) of said combined component of said detection signal (SD), and regulation means (20) responsive to said measurement (SP) of said combined component for producing said control signal (SG) with a value which is such that said third vibration has an amplitude which is equal to the amplitude of said parasite component of said second vibration and that said measurement signal (SP) of said combined component has a value which is equal to zero.

3. Device according to claim 2, **characterized by** the fact that :
- said transducer is formed by a quartz tuning fork (2) having a first and a second arm (2a, 2b) linked together by a base (2c), the principal faces of said tuning fork (2) being substantially perpendicular to the optical axis of said quartz and the length of said arms (2a, 2b) extending substantially in the direction of the mechanical axis of said quartz;
- said first excitation electrodes (3 to 6) comprising two electrodes (3, 4) arranged one opposite to the other on each of said principal faces of said first arm (2a) and being electrically connected to each other, and two electrodes (5, 6) arranged one opposite to the other on each lateral face of said first arm (2a) and being electrically connected to each other;
- said detection electrodes (7 to 10) comprising a first and a second electrode (7, 8) arranged next to each other on one of the principal faces of said second arm (2b) and extending substantially along the first half of the length of said second arm (2b), and a third and a fourth electrode (9, 10) arranged on the other principal face of said second arm (2b) opposite respectively said first and said second electrode (7, 8), said first and said fourth electrodes (7, 10) being electrically connected one to the other and said second and said third electrode (8, 9) being electrically connected one to each other; and
- said second excitation electrodes (11 to 14) comprising a fifth (11), a sixth (12), a seventh (13) and an eight (14) electrode respectively arranged in the extension of said first (7), of said second (8), of said third (9) and of said fourth electrode (10) and extending substantially along the second half of said length of said second arm (2b), said fifth and said eight (11, 14) electrode being electrically connected one to the other and said sixth and said seventh electrode (12, 13) being electrically connected one to the other.
